# EUROPEAN PATENT SPECIFICATION

(11) **EP 2 042 074 B1**
(45) Date of publication and mention of the grant of the patent: **10.11.2010**
(21) Application number: 07117387.6
(22) Date of filing: 27.09.2007
(51) Int. Cl.: A47L 15/42, D06F 39/08, F04D 13/02, H02K 7/118

(54) **Rotary pump, in particular for dishwashers or washing machines**
Rotationspumpe, insbesondere für Geschirrspülmaschinen oder Waschmaschinen
Pompe rotative, en particulier pour lave-vaisselle ou pour lave-linge

(43) Date of publication of application: 01.04.2009
(73) Proprietor: Electrolux Home Products Corporation N.V., 1930 Zaventem (BE)
(72) Inventor: Zanello, Fabio, 33170 PORDENONE (IT); Furlan, Luca, 33170 PORDENONE (IT); Breese, Kevin, 31020 S. FIOR (IT)
(74) Representative: Baumgartl, Gerhard Willi

(56) References cited:
- EP-A- 0 383 464
- EP-A- 1 760 861
- EP-A- 1 801 954
- WO-A-00/05799
- WO-A-99/35403
- FR-A- 2 725 568
- US-A1- 2005 147 510

## Description

The present invention relates to a rotary pump.

The present invention is particularly advantageous for use in dishwashers and washing machines, to which the following description refers purely by way of example.

In the electric household appliance industry, washing machines or dishwashers are known comprising a wash chamber housing a number of articles for washing; a feed pipe for feeding wash fluid into the wash chamber; and a drain pipe for draining wash fluid from the wash chamber.

The wash fluid is fed along the drain pipe by a rotary pump normally featuring a synchronous electric motor comprising a stator; a rotor having an output shaft mounted to rotate about its longitudinal axis; and an impeller fitted to a free end of the output shaft.

Operation of the synchronous electric motor comprises an initial startup stage, at which the rotor oscillates back and forth about said axis; and a subsequent steady-state stage, at which the rotor and, therefore, the output shaft and the impeller rotate about the axis in a given rotation direction.

Since the direction of rotation of the rotor and, therefore, of the steady-state impeller cannot be determined beforehand, known rotary pumps of the above type have various drawbacks, mainly due to the impellers having to be able, and therefore to be designed and manufactured, to rotate both clockwise and anticlockwise, thus resulting in relatively poor efficiency, and at any rate below that of impellers specially designed to rotate in one direction.
The International Patent application WO99/35403 discloses a rotary pump which is driven by a synchronous electric motor. Means are comprised for operating the pump which is driven only in one direction. A coupling means is arranged between the motor and a working part, e.g. an impeller. The coupling means comprise a cantilevered elastomeric element being arranged peripherally close to a cylindrical wall formed by a housing in which the rotor of the pump is arranged. The cantilevered elastomeric element is designed to be moved by a radial outward thrust against the cylindrical wall and thus blocking it in one rotational direction of the motor, while in the other rotational direction an unblocked movement is enabled.
From WO00/05799A an electric motor with permanent-magnet rotor having viscous shaft coupling is known in order to transmit the torque of the motor gradually to the load during start up. To this end the rotor is contained in a hermetic casing which contains a working fluid, whereas rotor and outer casing are interacting only by means of the working fluid, thus allowing smooth variations between the speed of the rotor and the applied load.

It is an object of the present invention to provide a rotary pump designed to eliminate the aforementioned drawbacks, and which is cheap and easy to produce.

According to the present invention, there is provided a rotary pump as claimed in the accompanying Claims.

A non-limiting embodiment of the present invention will be described by way of example with reference to the accompanying drawings, in which:
Figure 1 shows a schematic view in perspective of a preferred embodiment of the rotary pump according to the present invention;
Figure 2 shows a schematic longitudinal section of a detail of the rotary pump in Figure 1;
Figure 3 shows a schematic view in perspective of a detail of Figure 2;
Figure 4 shows a schematic longitudinal section of a detail of a variation of the rotary pump according to the present invention.

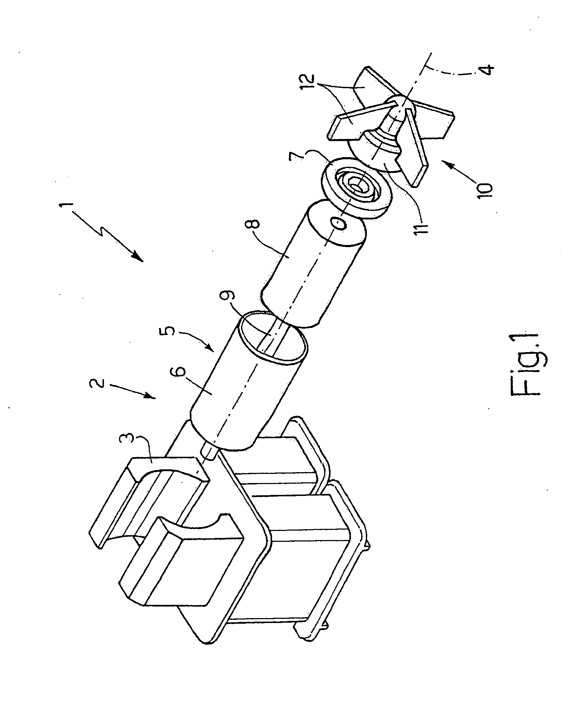

Number 1 in Figure 1 indicates as a whole a rotary pump comprising a synchronous electric motor 2, in turn comprising a stator 3 having a given longitudinal axis 4, and a substantially cylindrical housing 5 housed inside stator 3, coaxially with axis 4, and connected to stator 3 to rotate, with respect to stator 3, about axis 4.

Housing 5 comprises a tubular case 6, which is coaxial with axis 4, is closed axially by two covers 7 fixed, crosswise to axis 4, to case 6, and houses a rotor 8 of electric motor 2.

Rotor 8 is fitted inside housing 5, coaxially with axis 4, is fitted in rotary manner to both housing 5 and stator 3, has an outside diameter smaller than the inside diameter of housing 5, and is shorter in length, measured parallel to axis 4, than the distance between covers 7, also measured parallel to axis 4.

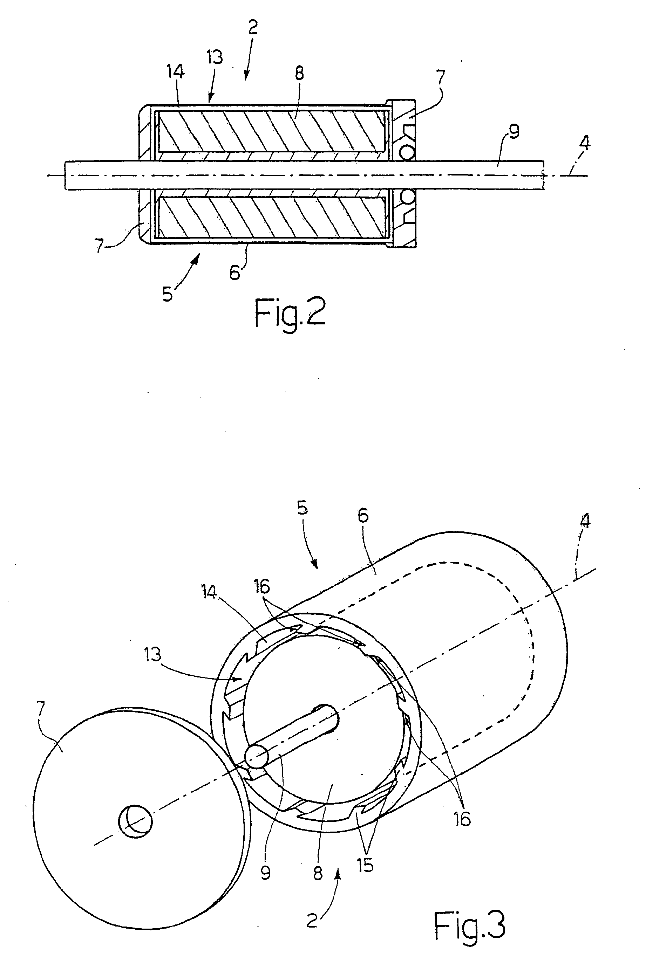

As shown in Figures 1 and 2, electric motor 2 also comprises an output shaft 9, which extends through housing 5 and rotor 8, coaxially with axis 4, has two free ends projecting from housing 5, and is fitted to housing 5 in axially and angularly fixed manner.

Rotary pump 1 also comprises an impeller 10, in turn comprising a hub 11 fitted, coaxially with axis 4, to one of the free ends of shaft 9, and a number of blades 12 spaced about axis 4 and projecting outwards from an outer surface of hub 11.

Housing 5 and, therefore, shaft 9 are locked angularly to rotor 8 by a viscous joint 13 comprising a fluidtight chamber 14 defined between housing 5 and rotor 8 and housing a variable-viscosity fluid.

With reference to Figure 3, chamber 14 has a number of teeth 15, which are equally spaced about axis 4, project inside chamber 14 from case 6, extend parallel to axis 4, and are located a given distance from rotor 8.

Each tooth 15 is bounded laterally by two substantially parallel walls 16 forming an angle of other than zero with respect to a relative radial plane containing axis 4, so as to resist flow of the fluid in chamber 14 differently in the two rotation directions about axis 4. In the example shown, teeth 15 are oriented to produce less anticlockwise resistance and greater clockwise resistance to flow of the fluid inside chamber 14, so that the fluid is oriented anticlockwise.

In actual use, during startup of rotary pump 1, rotor 8 is rotated about axis 4 with respect to housing 5 and, therefore, to output shaft 9, so as to also rotate the viscous fluid inside chamber 14 about axis 4. Rotation of rotor 8 with respect to housing 5 produces an increase in the viscosity of the fluid inside chamber 14 up to a threshold value, at which, housing 5 and, therefore, output shaft 9 are locked angularly to rotor 8 and rotated about axis 4 at the same rotation speed as rotor 8.

Because teeth 15 produce less anticlockwise resistance to flow of the fluid inside chamber 14, initial back and forth oscillation of rotor 8 about axis 4, typical of synchronous electric motor 2, is converted to anticlockwise rotation about axis 4 of the whole defined by rotor 8, the fluid in chamber 14, housing 5, output shaft 9 and, therefore, impeller 10.

In two variations not shown, teeth 15 may all be formed on rotor 8, or some on rotor 8 and some on case 6.

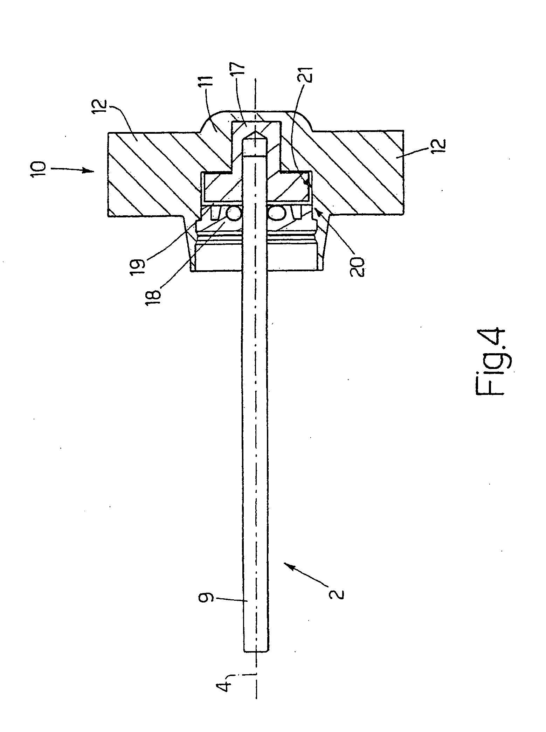

The Figure 4 variation differs from the Figure 1-3 embodiment by housing 5 being eliminated, rotor 8 being fitted in known manner to output shaft 9, and output shaft 9 and impeller 10 being connected to each other in rotary manner.

Output shaft 9 has a cap 17, which is fitted to a free end of shaft 9, is housed in rotary manner inside hub 11 of impeller 10, and defines - together with hub 11 and a cover 18 fitted, crosswise to axis 4, inside hub 11 - a fluidtight chamber 19 of a viscous joint 20 equivalent in all respects to viscous joint 13, and which locks impeller 10 angularly to cap 17 when shaft 9 is rotated with respect to hub 11, thus increasing the viscosity of the viscous fluid inside chamber 19.

Hub 11 is bounded internally by a wall 21 coaxial with axis 4 and having a number of teeth 15 (not shown in Figure 4), which are equivalent in every respect to teeth 15 of case 6, and project inside chamber 19 to orient the viscous fluid in chamber 19 in a given rotation direction about axis 4.

In this case, too, in two variations not shown, teeth 15 may all be formed on cap 17, or some on cap 17 and some on hub 11.

As will be clear from the above description, design and manufacture of blades 12 of impeller 10 can be optimized as a function of the anticlockwise rotation direction imparted to impeller 10 by teeth 15.

## Claims

1. A rotary pump, in particular for dishwashers and washing machines, comprising an impeller (10); a synchronous electric motor (2) for powering the impeller (10), the electric motor (2) comprising a stator (3), a rotor (8) with an output shaft (9) mounted to rotate about a longitudinal axis (4), and a first coupling device for connecting the rotor (8) and the output shaft (9) to each other in angularly fixed manner; and a second coupling device for connecting the output shaft (9) and the impeller (10) to each other in angularly fixed manner; at least one of the coupling devices comprising a viscous joint (13; 20), in turn comprising two coupling members (5, 8; 11, 17) connected to each other in rotary manner, and a viscous fluid for angularly locking the coupling members (5, 8; 11, 17) to each other when the coupling members (5, 8; 11, 17) are rotated with respect to each other; the rotary pump being **characterized in that** the viscous joint (13; 20) also comprises at least one flow-orienting member (15) for resisting flow of the viscous fluid differently in the two rotation directions about said axis (4).

2. A rotary pump as claimed in Claim 1, wherein the viscous joint (13; 20) comprises a number of said flow-orienting members (15) spaced about said axis (4).

3. A rotary pump as claimed in Claim 2, wherein the flow-orienting members (15) are equally spaced about said axis (4).

4. A rotary pump as claimed in any one of the foregoing Claims, wherein the coupling members (5, 8; 11, 17) define between them a chamber (14; 19) containing the viscous fluid; each flow-orienting member (15) projecting inside the chamber (14; 19) from one of the coupling members (5, 8; 11, 17).

5. A rotary pump as claimed in Claim 4, wherein the flow-orienting members (15) all project inside the chamber (14; 19) from the same coupling member (5, 8; 11, 17).

6. A rotary pump as claimed in Claim 4, wherein some of the flow-orienting members (15) project inside the chamber (14; 19) from one of the coupling members (5; 11), and some from the other coupling member (8; 17).

7. A rotary pump as claimed in any one of Claims 4 to 6, wherein a first said coupling member (5; 11) extends about a second said coupling member (8; 17); each flow-orienting member (15) projecting inside the chamber (14; 19) from the first coupling member (5; 11).

8. A rotary pump as claimed in any one of the foregoing Claims, wherein each flow-orienting member (15) comprises a tooth (15) forming an angle of other than zero with respect to a relative plane containing the axis (4).

9. A rotary pump as claimed in any one of the foregoing Claims, wherein the rotor (8) and the output shaft (9) are connected in angularly fixed manner to each other, and the second coupling device comprises the viscous joint (20).

10. A rotary pump as claimed in any one of Claims 1 to 8, wherein the output shaft (9) and the impeller (10) are connected in angularly fixed manner to each other, and the first coupling device comprises the viscous joint (13).

## Patentansprüche

1. Kreiselpumpe, insbesondere für Geschirrspüler und Waschmaschinen, umfassend ein Laufrad (10); einen elektrischen Synchronmotor (2) zur Energieversorgung des Laufrads (10), wobei der Elektromotor (2) einen Stator (3), einen Rotor (8) mit einer Abtriebswelle (9), die so montiert ist, dass sie um eine Längsachse (4) rotiert, und eine erste Kupplungsvorrichtung zur Verbindung des Rotors (8) mit der Abtriebswelle (9) in fester Winkelstellung umfasst; ferner eine zweite Kopplungsvorrichtung zur Verbindung der Abtriebswelle (9) mit dem Laufrad (10) in fester Winkelstellung; und wobei mindestens eine der Kopplungsvorrichtungen ein Viskosegelenk (13; 20) umfasst, das seinerseits zwei Kupplungselemente (5, 8; 11, 17) umfasst, die drehbar miteinander verbunden sind, und ein viskoses Fluid zur abgewinkelten Verriegelung der Kupplungselemente (5, 8; 11, 17) aneinander, wenn die Kupplungselemente (5, 8; 11, 17) zueinander in Drehbewegung versetzt werden; wobei die Kreiselpumpe **dadurch gekennzeichnet ist, dass** das Viskosegelenk (13; 20) ebenfalls mindestens ein Strömungsausrichtungselement (15) umfasst, das dazu dient, der Strömung des viskösen Fluids in den zwei Rotationsrichtungen um die Achse (4) unterschiedlichen Widerstand entgegen zu setzen.

2. Kreiselpumpe gemäß Anspruch 1, wobei das Viskosegelenk (13; 20) eine Anzahl der Strömungsausrichtungselemente (15) umfasst, die um die Achse (4) beabstandet sind.

3. Kreiselpumpe gemäß Anspruch 2, wobei die Strömungsausrichtungselemente (15) um die Achse (4) gleichmäßig beabstandet sind.

4. Kreiselpumpe gemäß einem der vorangehenden Ansprüche, wobei die Kupplungselemente (5, 8; 11, 17) zwischen sich eine Kammer (14; 19) begrenzen, welche das visköse Fluid enthält; wobei jedes Strömungsausrichtungselement (15) in der Kammer (14; 19) von einem der Kupplungselemente (5, 8; 11, 17) absteht.

5. Kreiselpumpe gemäß Anspruch 4, wobei die Strömungsausrichtungselemente (15) sämtlich in der Kammer (14; 19) von dem selben Kupplungselement (5, 8; 11, 17) abstehen.

6. Kreiselpumpe gemäß Anspruch 4, wobei einige der Strömungsausrichtungselemente (15) in der Kammer (14; 19) von einem der Kupplungselemente (5; 11) abstehen und einige vom anderen Kupplungselement (8; 17).

7. Kreiselpumpe gemäß einem der Ansprüche 4 bis 6, wobei sich ein erstes Kupplungselement (5; 11) um ein zweites Kupplungselement (8; 17) erstreckt; wobei jedes Strömungsausrichtungselement (15) in der Kammer (14; 19) vom ersten Kupplungselement (5; 11) absteht.

8. Kreiselpumpe gemäß einem der vorangehenden Ansprüche, wobei jedes der Strömungsausrichtungselemente (15) einen Zahn (15) umfasst, der einen Winkel ungleich Null mit Bezug auf eine zugehörige Ebene bildet, welche die Achse (4) enthält.

9. Kreiselpumpe gemäß einem der vorangehenden Ansprüche, wobei der Rotor (8) und die Abtriebswelle (9) in festem Winkel miteinander verbunden sind und die zweite Kupplungsvorrichtung das Viskosegelenk (20) umfasst.

10. Kreiselpumpe gemäß einem der Ansprüche 1 bis 8, wobei die Abtriebswelle (9) und das Laufrad (10) in festem Winkel miteinander verbunden sind und die erste Kupplungsvorrichtung das Viskosegelenk (13) umfasst.

## Revendications

1. Pompe rotative, en particulier pour les lave-vaisselle et les machines à laver, comprenant un rouet centrifuge (10) ; un moteur électrique synchrone (2) pour alimenter le rouet centrifuge (10), le moteur électrique (2) comprenant un stator (3), un rotor (8) avec un arbre de sortie (9) monté pour tourner autour d'un axe longitudinal (4), et un premier dispositif de couplage pour raccorder le rotor (8) et l'arbre de sortie (9) entre eux d'une manière angulairement fixe ; et un deuxième dispositif de couplage pour raccorder l'arbre de sortie (9) et le rouet centrifuge (10) entre eux d'une manière angulairement fixe ; au moins l'un des dispositifs de couplage comprenant un joint visqueux (13 ; 20), comprenant à son tour deux éléments de couplage (5, 8 ; 11, 17) raccordés entre eux d'une manière rotative, et un fluide visqueux pour bloquer de manière angulaire les éléments de couplage (5, 8 ; 11, 17) entre eux lorsque les éléments de couplage (5, 8 ; 11, 17) tournent l'un par rapport à l'autre ; la pompe rotative étant **caractérisée en ce que** le joint visqueux (13 ; 20) comprend également au moins un élément d'orientation de flux (15) pour résister au flux du fluide visqueux différemment dans les deux directions de rotation autour dudit axe (4).

2. Pompe rotative selon la revendication 1, dans laquelle le joint visqueux (13 ; 20) comprend un certain nombre desdits éléments d'orientation de flux (15) espacés autour dudit axe (4).

3. Pompe rotative selon la revendication 2, dans laquelle les éléments d'orientation de flux (15) sont espacés à égale distance autour dudit axe (4).

4. Pompe rotative selon l'une quelconque des revendications précédentes, dans laquelle les éléments de couplage (5, 8 ; 11, 17) définissent entre eux une chambre (14 ; 19) contenant le fluide visqueux ; chaque élément d'orientation de flux (15) faisant saillie à l'intérieur de la chambre (14 ; 19) à partir de l'un des éléments de couplage (5, 8 ; 11, 17).

5. Pompe rotative selon la revendication 4, dans laquelle les éléments d'orientation de flux (15) font tous saillie à l'intérieur de la chambre (14 ; 19) à partir du même élément de couplage (5, 8 ; 11, 17).

6. Pompe rotative selon la revendication 4, dans laquelle certains des éléments d'orientation de flux (15) font saillie à l'intérieur de la chambre (14 ; 19) à partir de l'un des éléments de couplage (5 ; 11) et certains à partir de l'autre élément de couplage (8 ; 17).

7. Pompe rotative selon l'une quelconque des revendications 4 à 6, dans laquelle un premier dudit élément de couplage (5 ; 11) s'étend autour d'un deuxième dudit élément de couplage (8 ; 17) ; chaque élément d'orientation de flux (15) faisant saillie à l'intérieur de la chambre (14 ; 19) à partir du premier élément de couplage (5 ; 11).

8. Pompe rotative selon l'une quelconque des revendications précédentes, dans laquelle chaque élément d'orientation de flux (15) comprend une dent (15) formant un angle différent de zéro par rapport à un plan relatif contenant l'axe (4).

9. Pompe rotative selon l'une quelconque des revendications précédentes, dans laquelle le rotor (8) et l'arbre de sortie (9) sont raccordés d'une manière angulairement fixe l'un par rapport à l'autre et le deuxième dispositif de couplage comprend le joint visqueux (20).

10. Pompe rotative selon l'une quelconque des revendications 1 à 8, dans laquelle l'arbre de sortie (9) et le rouet centrifuge (10) sont raccordés d'une manière angulairement fixe l'un par rapport à l'autre, et le premier dispositif de couplage comprend le joint visqueux (13).
